# FASCICULE DE BREVET EUROPEEN

(11) **EP 2 052 881 B1**
(45) Date de publication et mention de la délivrance du brevet: **30.11.2011**
(21) Numéro de dépôt: 08290965.6
(22) Date de dépôt: 15.10.2008
(51) Int. Cl.: B60C 23/00

(54) **Dispositif pour connecter un pneumatique de roue d'aeronef à un système de gonflage**
Vorrichtung zur Adaption eines Flugzeugreifens an ein zentrales Reifenfüllsystem
Connecting device of a tire of an aircraft to a central inflation system

(30) Priorité: 23.10.2007 FR 0707429
(43) Date de publication de la demande: 29.04.2009
(73) Titulaire: Messier-Bugatti-Dowty, 78140 Velizy Villacoublay (FR)
(72) Inventeur: Collet, Olivier, 91120 Palaiseau (FR); Pradier, Jean-Clair, 78800 Houilles (FR); Maes, Bertrand, 92170 Vanves (FR)
(74) Mandataire: Parzy, Benjamin Alain

(56) Documents cités:
- US-A- 2 107 405
- US-A- 2 685 906
- US-A- 4 685 501
- US-A- 4 700 763

## Description

L'invention concerne un dispositif pour connecter un pneumatique de roue d'aéronef à une centrale pneumatique de l'aéronef.

### ARRIERE-PLAN DE L'INVENTION

On connaît des aéronefs comportant des dispositifs pour connecter les pneumatiques des roues à une centrale pneumatique embarquée. La centrale peut être un compresseur d'air, un générateur d'azote, ou tout autre système permettant de fournir un gaz sous pression susceptible de gonfler les pneumatiques. Selon que la pression proposée par la centrale pneumatique est supérieure ou inférieure à celle régnant dans le pneumatique, le pneumatique se gonfle ou se dégonfle. Lorsque l'aéronef est au sol, la centrale pneumatique peut être connectée à une source de pression extérieure.

Le document GB1031726 illustre un tel dispositif, dont certains éléments sont extérieurs à l'essieu. En particulier, la roue est équipée d'un capot de protection qui recouvre l'extrémité de l'essieu et qui reçoit une valve d'isolation du pneumatique. Cette disposition de la valve la rend sensible aux chocs externes. Par ailleurs, cette valve est actionnée par une aiguille mobile dans un orifice axial de l'essieu. Ce type de dispositif n'est pas adapté aux aéronefs modernes possédant la plupart du temps des essieux creux. En outre, il comporte plusieurs parties démontables séparément (l'aiguille dans l'essieu, la valve dans le capot de la roue), ce qui ne facilite pas sa maintenance.

On connaît par ailleurs des documents US 2107405 et US2685906 d'autres dispositifs, plus particulièrement adaptés aux véhicules terrestres. En particulier, le dispositif illustré dans le document US2685906, conforme au préambule de la revendication 1, se révèle intéressant en ce qu'il est entièrement modulaire et peut être démonté en bloc, à condition bien sûr de le déconnecter des arrivées de gaz. Cependant, ce dispositif s'étend en saillie de la roue et est donc exposé aux chocs. Une autre solution d'un dispositif pour connecter un pneumatique de roue d'aéronef à une centrale pneumatique de l'aéronef est décrit dans le document US-A-4685501.

### OBJET DE L'INVENTION

L'invention a pour objet un dispositif pour ajuster la pression dans un pneumatique équipant une roue d'aéronef, inspiré de celui du document US2685906, mais mieux protégé.

### BREVE DESCRIPTION DE L'INVENTION

Selon l'invention, on propose un dispositif pour connecter sélectivement à une centrale pneumatique d'un aéronef un pneumatique d'une roue de l'aéronef montée tournante sur un essieu creux de l'aéronef, le dispositif comprenant :
- un stator et un rotor qui est monté tournant sur le stator selon un axe qui coïncide en service avec un axe de rotation de la roue, et qui comporte des moyens de son entraînement en rotation par la roue ;
- un joint d'étanchéité qui s'étend entre le stator et le rotor pour fermer une première chambre s'étendant entre le rotor et le stator et dans laquelle débouche un premier port pneumatique porté par le stator pour la connexion du dispositif avec la centrale pneumatique ;
- le rotor définissant une deuxième chambre dans laquelle débouche un deuxième port pneumatique pour la connexion du dispositif avec le pneumatique ;
- le rotor portant une valve s'étendant au travers d'une paroi du rotor séparant la première et la deuxième chambre pour mettre sélectivement les deux chambres en communication pneumatique lorsque la valve est ouverte ;
- le stator portant un actionneur agissant sélectivement sur la valve pour faire commuter celle-ci d'un état fermé stable à un état ouvert.

Selon l'invention, le stator est en forme de cloche qui est prévue pour être reçue à ajustement dans l'essieu et qui comporte une paroi de fond qui porte le premier port pneumatique pour sa connexion à la centrale pneumatique par un tuyau cheminant dans l'essieu, le rotor s'étendant substantiellement à l'intérieur du stator.

Ainsi, l'ensemble du dispositif est logé dans l'essieu et s'y trouve à l'abri des chocs. Qui plus est, la disposition du premier port sur la paroi de fond facilite la connexion du dispositif à la centrale via un tuyau cheminant dans l'essieu.

De préférence, l'actionneur est du type électromécanique. Ainsi, l'utilisation d'un actionneur électromécanique permet d'inclure celui-ci intégralement dans la première chambre, sans qu'il soit nécessaire de prévoir de chambre d'actionnement dans le stator ni de port pneumatique supplémentaire pour l'activation de l'actionneur. Le gaz sous pression en provenance de la centrale pneumatique peut s'écouler du premier port vers la valve ouverte en traversant l'actionneur électromécanique. Cependant, le gaz n'atteindra le pneumatique que si la valve est ouverte, et donc que si l'actionneur est activé.

### BREVE DESCRIPTION DES DESSINS

L'invention sera mieux comprise à la lumière de la description qui suit en référence aux figures des dessins annexés parmi lesquelles :
- la figure 1 est une vue en coupe d'une roue montée sur un essieu d'aéronef équipé d'un dispositif selon un mode particulier de réalisation de l'invention ;
- la figure 2 est une vue en coupe agrandie du dispositif illustré à la figure 1.

### DESCRIPTION DETAILLEE DE L'INVENTION

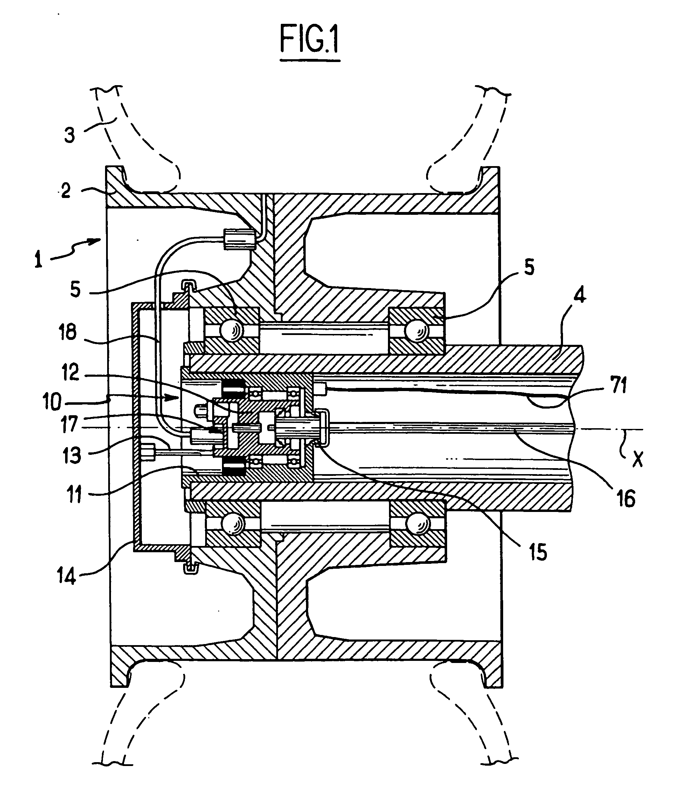

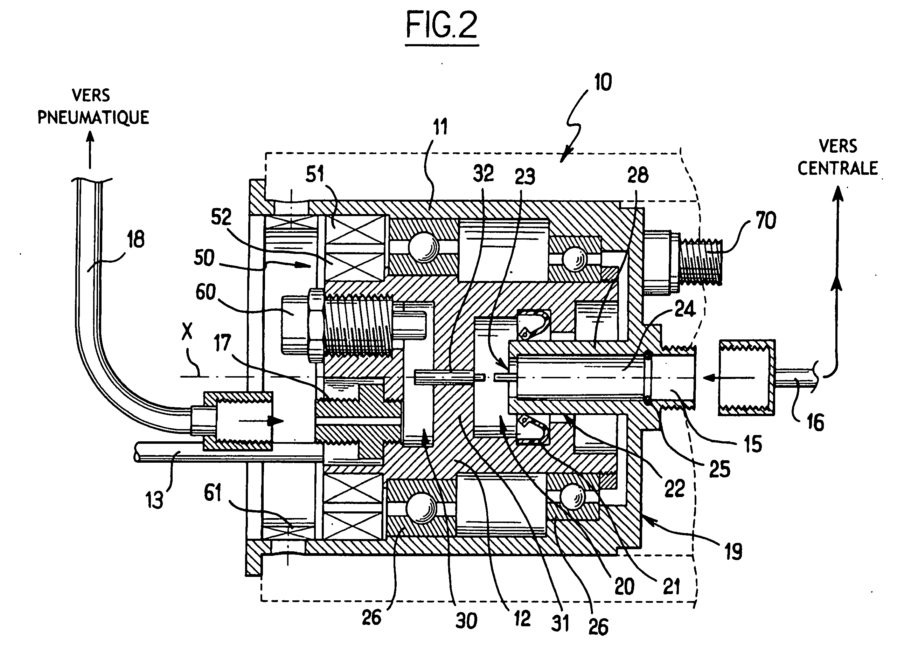

En référence à la figure 1, le dispositif de l'invention est ici illustré en place sur un aéronef équipé d'une génération pneumatique, par exemple un compresseur qui reçoit de l'azote d'un système de séparation d'air qui envoie l'oxygène de l'air vers un circuit d'oxygène de l'aéronef, et l'azote de l'air vers le compresseur. L'aéronef comporte au moins une roue 1 comportant une jante 2 qui porte un pneumatique 3 et qui est reçue à rotation selon un axe de rotation X sur un essieu 4 creux, au moyen de roulements 5. Le dispositif 10 de l'invention est disposé dans l'essieu 4 à l'extrémité de ce dernier et comporte un stator 11 enfoncé à ajustement dans l'essieu 4 et fixé à ce dernier par des moyens de fixation non représentés. Le dispositif 10 comporte en outre un rotor 12 monté tournant dans le stator 11. Le dispositif 10 sera détaillé plus loin en relation avec la figure 2. Il suffit ici de constater que le rotor 12 est entraîné en rotation avec la roue grâce à un doigt 13 qui s'étend pour coopérer avec un capot de protection 14 solidaire de la roue 1.

Se portant maintenant vers la figure 2, on constate que le stator 11 est globalement en forme de cloche qui est prévue pour être enfoncée à ajustement dans l'essieu figuré ici en pointillés, quasiment entièrement à part une collerette d'extrémité venant buter sur l'extrémité de l'essieu. Le stator 11 comporte une paroi de fond 19 qui porte un premier port pneumatique 15 pour la connexion du dispositif à la centrale pneumatique de l'aéronef, au moyen d'un tuyau 16 cheminant dans l'essieu 4. Le rotor 12 est ici reçu intégralement dans le stator et est monté tournant dans le stator 11 au moyen de roulements 26. Le rotor 12 porte un deuxième port pneumatique 17 pour la connexion du dispositif avec le pneumatique, via un tuyau 18 s'étendant entre le rotor 12 et la jante 2.

L'ensemble est particulièrement compact et s'intègre entièrement dans l'essieu, ce qui le protège de tout choc externe.

Le stator 11 et le rotor 12 définissent ensemble une première chambre 20 qui est fermée ici par un joint à lèvre 21 qui est porté par le rotor 12 pour coopérer avec une portée cylindrique 22 formée par la paroi externe d'une protrusion axiale 28 du stator 11 s'étendant dans le rotor 12. La protrusion axiale 28 définit un logement axial 23 qui débouche dans la première chambre 20 et dans lequel un actionneur électromécanique 24 oblong est engagé, ce dernier étant arrêté axialement par un jonc 25. Le premier port pneumatique 15 débouche dans le logement 23, et donc dans la première chambre 20, étant entendu que l'actionneur 24 est perméable aux gaz et ne forme donc pas un obstacle au passage de ceux-ci. L'actionneur 24 s'étend ici selon l'axe X et possède un organe d'actionnement terminal mobile selon ledit axe X.

Par ailleurs, le rotor 12 définit une deuxième chambre 30 dans laquelle débouche le deuxième port pneumatique 17. La deuxième chambre 30 est séparée de la première chambre 20 par une paroi 31 qui est traversée par une valve 32 s'étendant selon l'axe de rotation X. La valve est normalement fermée, ce qui isole les deux chambres, mais peut être ouverte par l'organe d'actionnement de l'actionneur 24 qui pousse la tige de la valve 32 pour ouvrir cette dernière et mettre les deux chambres 20, 30 en communication pneumatique.

Pour modifier la pression dans le pneumatique, il convient de mettre en communication ce dernier avec la centrale pneumatique. Pour ce faire, on active l'actionneur 24 de sorte que celui-ci ouvre la valve 32 pour mettre en communication les chambres 20 et 30, connectées respectivement à la centrale pneumatique et au pneumatique. On laisse alors la valve 32 ouverte pendant un temps suffisant pour que la pression désirée s'établisse dans le pneumatique.

Ces opérations de modification de la pression ne s'effectuent normalement que lorsque l'aéronef est en vol ou lorsque l'aéronef est à l'arrêt au sol. Dans ces conditions, le joint à lèvre 21 n'est mis sous pression que lorsque la roue ne tourne pas. L'étanchéité du joint à lèvre 21 s'en trouve alors plus facilement réalisée. Néanmoins, si une légère fuite apparaissait au niveau du joint à lèvre 21, il suffira que le débit de fuite soit notablement inférieur au débit de gonflage pour néanmoins assurer le gonflage du pneumatique. En variante, on pourra utiliser toute autre type de joint d'étanchéité, compatible avec un mouvement de rotation, et qui est capable d'assurer une étanchéité aux gaz au moins lorsque la roue ne tourne pas.

L'utilisation d'un actionneur électromécanique permet d'éviter l'amenée d'une seconde source pneumatique pour commander l'actionneur, comme dans le mode de réalisation illustré à la figure 5 du document US2685906. En effet, il serait difficile de faire cheminer dans l'essieu un deuxième tuyau pneumatique. En outre, l'actionneur peut être disposé intégralement dans la première chambre comme dans le premier mode de réalisation illustré à la figure 4 du même document, mais tout en permettant une commande séparée de l'actionneur et de la mise en pression par la centrale pneumatique, ce qui n'est pas possible dans le mode de réalisation de la figure 4.

La configuration du dispositif de l'invention permet en outre d'intégrer facilement un capteur de rotation de la roue, puisque le rotor 12 est entraîné en rotation avec la roue. Ainsi, un tachymètre 50 est disposé dans le dispositif de l'invention, avec une partie fixe 51 solidaire du stator 11 et une partie tournante 52 solidaire du rotor 12 qui s'étend en regard de la partie fixe 51 pour être en interaction électromagnétique à distance avec celle-ci. De façon connue en soi, l'interaction électromagnétique génère dans la partie fixe 51 un courant proportionnel à la vitesse de rotation du rotor 12, donc de la roue. Il suffit alors de mesurer le courant qui circule dans la partie fixe 51 pour connaître la vitesse de rotation de la roue.

Par ailleurs, la configuration du dispositif de l'invention permet également d'intégrer facilement un capteur de pression du pneumatique. Ainsi, un capteur de pression 60 est disposé sur le rotor 12 pour mesurer la pression régnant dans la deuxième chambre 30, et donc dans le pneumatique, puisque la deuxième chambre 30 est en relation pneumatique avec le pneumatique. Ici, le capteur de pression 60 est de type radiofréquence et reçoit son énergie électrique d'une antenne 61 disposée sur le stator 11 pour être en interaction électromagnétique à distance avec le capteur de pression 60, quelque soit la position angulaire du rotor 12. En retour, le capteur de pression 60 influence l'impédance de l'antenne 61 en fonction de la pression régnant de la chambre 12. Il suffit alors de mesurer le courant qui circule dans l'antenne 60 pour connaître la pression dans le pneumatique ou toute autre grandeur électrique (tension, impédance...) relative à l'antenne 60 variant avec la pression. Le capteur de pression ainsi disposé remplace le capteur qui est habituellement disposé directement sur la jante de la roue.

Les capteurs intégrés dans le dispositif de l'invention sont donc particulièrement protégés des chocs externes.

La partie fixe 51 du tachymètre 50, l'antenne 61, et l'actionneur 24 sont tous reliés électriquement à l'aéronef au moyen d'un connecteur électrique 70 s'étendant également sur la paroi de fond 19 du stator 11, au moyen d'un câble électrique 71 cheminant également dans l'essieu 4.

L'invention n'est pas limitée à ce qui vient d'être décrit, mais bien au contraire englobe toute variante entrant dans le cadre défini par les revendications.

En particulier, bien que l'on ait illustré ici un dispositif avec un rotor intégralement logé dans le stator, on pourra, sans sortir de l'invention, prévoir un rotor qui dépasse légèrement du stator, par exemple par le deuxième port pneumatique qui peut saillir de l'extrémité du stator.

## Revendications

1. Dispositif pour connecter sélectivement à une centrale pneumatique d'un aéronef un pneumatique d'une roue montée tournante sur un essieu creux de l'aéronef, le dispositif comprenant:
- un stator (11) et un rotor (12) qui est monté tournant sur le stator selon un axe qui coïncide en service avec un axe de rotation (X) de la roue, et qui comporte des moyens (13) de son entraînement en rotation par la roue ;
- un joint d'étanchéité (21) qui s'étend entre le stator et le rotor pour fermer une première chambre (20) s'étendant entre le rotor et le stator et dans laquelle débouche un premier port pneumatique (15) porté par le stator pour la connexion du dispositif avec la centrale pneumatique ;
- le rotor définissant une deuxième chambre (30) dans laquelle débouche un deuxième port pneumatique (17) pour la connexion du dispositif avec le pneumatique ;
- le rotor portant une valve (32) s'étendant au travers d'une paroi (31) du rotor séparant la première et la deuxième chambre pour mettre sélectivement les deux chambres en communication pneumatique lorsque la valve est ouverte ;
- le stator portant un actionneur (24) agissant sélectivement sur la valve pour la faire commuter d'un état fermé stable à un état ouvert ;
**caractérisé en ce que** le stator est en forme de cloche qui est prévue pour être reçue à ajustement dans l'essieu et qui comporte une paroi de fond (19) qui porte le premier port pneumatique pour sa connexion à la centrale pneumatique par un tuyau cheminant dans l'essieu, le rotor s'étendant substantiellement à l'intérieur du stator.

2. Dispositif selon la revendication 1, dans lequel le joint d'étanchéité est un joint à lèvre (21) s'étendant entre le rotor (12) et une portée cylindrique (22) formant une paroi externe d'une protrusion axiale (28) du stator (11) engagée dans le rotor.

3. Dispositif selon la revendication 2, dans lequel la protrusion axiale (28) définit un logement axial qui débouche dans la première chambre et qui reçoit l'actionneur (24).

4. Dispositif selon la revendication 3, dans lequel le premier port pneumatique (15) est disposé axialement pour déboucher dans le logement axial.

5. Dispositif selon la revendication 1, dans lequel l'actionneur est du type électromécanique.

6. Dispositif selon la revendication 1, dans lequel le dispositif comporte un tachymètre ayant une partie fixe portée par le stator (11) et une partie tournante portée par le rotor (12).

7. Dispositif selon la revendication 1, dans lequel le dispositif comporte un capteur de pression disposé sur le rotor pour mesurer la pression régnant dans la deuxième chambre (30).

## Claims

1. A device for selectively connecting a tire to a pneumatic unit of an aircraft, the tire forming part of a wheel mounted to rotate on a hollow axle of the aircraft, the device comprising:
· a stator (11) and a rotor (12) mounted to rotate relative to the stator about an axis that coincides, in operation, with the axis of rotation (X) of the wheel, and including means (13) for enabling the wheel to drive it in rotation;
· a seal (21) that extends between the rotor and the stator to close a first chamber (20) extending between the rotor and the stator and into which a first pneumatic port (15) opens out, the port being carried by the stator for connecting the device to the pneumatic unit;
· the rotor defining a second chamber (30) into which a second pneumatic port (17) opens out for connecting the device to the tire;
· the rotor carrying a valve (32) extending through a wall (31) of the rotor separating the first and second chambers, thereby enabling the two chambers to be put selectively into pneumatic communication by opening the valve; and
· the stator carrying an actuator (24) that acts selectively on the valve in order to switch between a stable closed state and an open state;
the device being **characterized in that** the stator is bell-shaped, being designed to be received as a push-fit in the axle and having an end wall (19) that carries the first pneumatic port for connection to the pneumatic unit by a pipe running inside the axle, the rotor extending substantially inside the stator.

2. A device according to claim 1, wherein the seal is a lip seal (21) extending between the rotor (12) and a cylindrical bearing surface (22) forming an outer wall of an axial protrusion (28) of the stator (11) engaged inside the rotor.

3. A device according to claim 2, wherein the axial protrusion (28) defines an axial housing that opens out into the first chamber and that receives the actuator (24).

4. A device according to claim 3, wherein the first pneumatic port (15) is disposed axially to open out into the axial housing.

5. A device according to claim 1, wherein the actuator is of the electromechanical type.

6. A device according to claim 1, wherein the device includes a tachometer having a stationary portion carried by the stator (11) and a rotary portion carried by the rotor (12).

7. A device according to claim 1, wherein the device includes a pressure sensor disposed on the rotor to measure the pressure that exists in the second chamber (30).

## Patentansprüche

1. Vorrichtung zum selektiven Verbinden eines Luftreifens eines an einer hohlen Radachse eines Flugzeugs drehbar gelagerten Rades mit einer Druckluftstation des Flugzeugs, wobei die Vorrichtung umfasst:
- einen Stator (11) und einen Rotor (12), der an dem Stator um eine Achse drehbar gelagert ist, die im Betrieb mit einer Drehachse (X) des Rades zusammenfällt, und der Mittel (13) für seinen Drehantrieb durch das Rad umfasst,
- eine Dichtung (21), die sich zwischen dem Stator und dem Rotor erstreckt, um eine erste Kammer (20) zu verschließen, die sich zwischen dem Rotor und dem Stator erstreckt und in die ein erster von dem Stator getragener Druckluftanschluss (15) zur Verbindung der Vorrichtung mit der Druckluftstation mündet,
- wobei der Rotor eine zweite Kammer (30) definiert, in die ein zweiter Druckluftanschluss (17) zur Verbindung der Vorrichtung mit dem Luftreifen mündet,
- wobei der Rotor ein Ventil (32) trägt, das sich durch eine die erste Kammer von der zweiten Kammer trennende Wand (31) des Rotors erstreckt, um die beiden Kammern selektiv miteinander in Druckluftverbindung zu bringen, wenn das Ventil offen ist,
- wobei der Stator einen Aktuator (24) trägt, der selektiv auf das Ventil einwirkt, um es von einem stabilen geschlossenen Zustand in einen offenen Zustand umzuschalten,
**dadurch gekennzeichnet, dass** der Stator die Form einer Glocke hat, die vorgesehen ist, um mit Passsitz in der Radachse aufgenommen zu werden, und die eine Bodenwand (19) umfasst, die den ersten Druckluftanschluss für seine Verbindung mit der Druckluftstation durch ein in der Radachse verlaufendes Rohr trägt, wobei sich der Rotor im Wesentlichen im Inneren des Stators erstreckt.

2. Vorrichtung nach Anspruch 1, wobei die Dichtung eine Lippendichtung (21) ist, die sich zwischen dem Rotor (12) und einer zylindrischen Auflagefläche (22) erstreckt, die eine Außenwand eines mit dem Rotor in Eingriff stehenden axialen Vorsprungs (28) des Stators (11) bildet.

3. Vorrichtung nach Anspruch 2, wobei der axiale Vorsprung (28) eine axiale Aufnahme definiert, die in die erste Kammer mündet und den Aktuator (24) aufnimmt.

4. Vorrichtung nach Anspruch 3, wobei der erste Druckluftanschluss (15) axial angeordnet ist, um in die axiale Aufnahme zu münden.

5. Vorrichtung nach Anspruch 1, wobei der Aktuator elelctromechanischer Art ist.

6. Vorrichtung nach Anspruch 1, wobei die Vorrichtung einen Tachometer umfasst, der einen von dem Stator (11) getragenen festen Abschnitt und einen von dem Rotor (12) getragenen sich drehenden Abschnitt umfasst.

7. Vorrichtung nach Anspruch 1, wobei die Vorrichtung einen Drucksensor umfasst, der an dem Rotor zum Messen des in der zweiten Kammer (30) herrschenden Druckes angeordnet ist.
